# EUROPÄISCHE PATENTANMELDUNG

(11) **EP 1 306 759 A2**
(43) Veröffentlichungstag der Anmeldung: **02.05.2003**
(21) Anmeldenummer: 02020553.0
(22) Anmeldetag: 17.09.2002
(51) Int. Cl.: G06F 11/36

(54) **Programmausführung bei einer Chipkarte**

(30) Priorität: 24.10.2001 DE 10152458
(71) Anmelder: Giesecke & Devrient GmbH, 81677 München (DE)
(72) Erfinder: Karch, Torsten, 88085 Langenargen (DE); Nase, Rainer, 81375 München (DE)

(57) **Zusammenfassung**

Bei einem Verfahren zur Programmausführung durch eine Chipkarte weist die Chipkarte eine Vergleichslogik (36) auf, die die Adresse eines jeweils zur Ausführung vorgesehenen Programmbefehls (42x) mit mehreren Auslöseadressen (46x) vergleicht. Stellt die Vergleichslogik (36) keine Übereinstimmung fest, so wird der Programmbefehl (46x) ausgeführt. Bei einer Übereinstimmung wird dagegen eine Verteilerroutine (48) aufgerufen, die je nach der Auslöseadresse (46x), mit der die Übereinstimmung festgestellt wurde, zu einer von mehreren Patchroutinen (50x) verzweigt. Nach der Ausführung der Patchroutine (50x) erfolgt ein Rücksprung zu dem auszuführenden Programm. Eine Chipkarte und ein Verfahren zur Herstellung einer Chipkarte weisen entsprechende Merkmale auf. Durch die Erfindung wird eine Möglichkeit zur Programmfehlerkorrektur bei Chipkarten geschaffen, die sich dadurch auszeichnet, daß Speicherplatz und zusätzliche Programmlaufzeit nur dann benötigt werden, wenn tatsächlich Fehler im Programmspeicher enthalten sind und korrigiert werden müssen.

## Beschreibung

Die Erfindung betrifft allgemein das technische Gebiet der Chipkarten und der Programmierung von Chipkarten. Spezieller betrifft die Erfindung Chipkarten, die einen Ein-Chip-Mikrocontroller mit einem Prozessorkern und einem maskenprogrammierten Programmspeicher aufweisen.

Bei Mikrocontrollern für Chipkarten wird als Programmspeicher in der Regel maskenprogrammiertes ROM (*read only memory*) eingesetzt, weil diese Technologie das beste Verhältnis zwischen bereitgestelltem Speicherplatz und benötigter Chipfläche aufweist. Der Inhalt des maskenprogrammierten ROMs muß allerdings schon bei der Herstellung der Mikrocontroller festgelegt werden. Wird nachträglich ein Fehler in dem im ROM enthaltenen Programm entdeckt, so entsteht hoher Schaden, weil neue Masken und neue Mikrocontroller gefertigt werden müssen und der Fertigungsprozeß beim Halbleiterhersteller effektiv wieder von neuem beginnt.

Nach einem zumindest internen Stand der Technik der Anmelderin ist es bekannt, den im maskenprogrammierten ROM enthaltenen Programmcode in Abschnitte zu unterteilen, zwischen denen je ein Aussprung zu einem Programmbefehl in einem elektrisch programmierbaren Speicher vorgesehen ist. Sind im maskenprogrammierten ROM keine Fehler enthalten, so werden bei der Initialisierung der Chipkarte in den elektrisch programmierbaren Speicher lediglich Rücksprungbefehle an die dem jeweiligen Aussprung unmittelbar folgenden Befehle des ROM geschrieben. Ist dagegen ein Programmabschnitt fehlerhaft, so wird dieser im elektrisch programmierten Speicher durch einen entsprechend korrigierten Programmcode, einen sogenannten *patch*, ersetzt, der mit einem Rücksprung zum nächsten Abschnitt im Programmspeicher endet. Die bei diesem Verfahren erforderlichen Aussprünge im Programmspeicher benötigen jedoch Speicherplatz und Rechenzeit, selbst wenn kein Programmfehler zu beheben ist. Überdies ist es schwierig, bei der Programmierung hinreichend viele, aber nicht zu häufige Aussprungpunkte vorzusehen.

Eine Reihe von Verfahren und Vorrichtungen zur Programmausführung bei Mikrocomputern und Mikrocontrollern ist aus den US-Patenten 4 542 453, 5 901 225, 5 357 627, 5 454 100, 4 905 200, 4 831 517, 5 051 897 und 4 802 119 bekannt. Die dort beschriebenen Techniken sind jedoch zur vorliegenden Erfindung gattungsfremd, weil sie nicht auf die Verwendung bei Chipkarten ausgelegt sind und demgemäß die für Chipkarten spezifischen Probleme nicht oder nur unzureichend lösen. Diese Probleme sind insbesondere die in vielfacher Hinsicht bestehenden Ressourcenbeschränkungen bei Chipkarten sowie die hohen Anforderungen zur Datensicherheit und zum Schutz gegen Manipulation. Beispielsweise wäre ein System wie das aus dem US-Patent 4 542 453 bekannte, bei dem ein externes Programmkorrekturmodul an von außen zugängliche Daten-, Adreß- und Steuerbusse angeschlossen wird, aus Sicherheitsgründen bei einer Chipkarte nicht einsetzbar.

Die Erfindung hat die Aufgabe, die Probleme des Standes der Technik zumindest zum Teil zu vermeiden und eine auf die spezifischen Erfordernisse bei Chipkarten ausgerichtete Möglichkeit zur Programmfehlerkorrektur zu schaffen. Insbesondere soll durch die Erfindung der beim eingangs genannten Stand der Technik bestehende Mehrbedarf an Speicherplatz und Programmlaufzeit vermieden werden. Vorzugsweise soll die Erfindung möglichst weitgehend die bereits vorhandene Hardware nutzen und nur relativ geringen Zusatzaufwand erfordern.

Erfindungsgemäß wird diese Aufgabe ganz oder zum Teil gelöst durch ein Verfahren zur Programmausführung mit den Merkmalen des Anspruchs 1, eine Chipkarte mit den Merkmalen des Anspruchs 10 und ein Verfahren zur Herstellung einer Chipkarte mit den Merkmalen des Anspruchs 11. Die abhängigen Ansprüche definieren bevorzugte Ausgestaltungen der Erfindung.

Die Erfindung geht von der Grundidee aus, eine Vergleichslogik vorzusehen, die die Adresse eines jeweils zur Ausführung vorgesehenen Programmbefehls mit mehreren Auslöseadressen vergleicht. Stellt die Vergleichslogik keine Übereinstimmung fest, so wird der Programmbefehl ausgeführt. Bei einer Übereinstimmung wird dagegen eine Verteilerroutine aufgerufen, die je nach der Auslöseadresse, mit der die Übereinstimmung festgestellt wurde, zu einer von mehreren Patchroutinen verzweigt. Nach der Ausführung der Patchroutine erfolgt ein Rücksprung zu dem auszuführenden Programm, wobei das durch die Patchroutine korrigierte Programmstück in der Regel übersprungen wird - sofern die Patchroutine nicht lediglich den Zweck hat, zusätzliche Programmbefehle einzufügen. Die Auslöseadressen und die Patchroutinen sind gegen eine nachträgliche Veränderung gesichert.

Die Erfindung bietet den erheblichen Vorteil, daß bei der Programmentwicklung keinerlei Rücksicht auf die Möglichkeit einer späteren Fehlerkorrektur genommen werden muß und daß insbesondere keine Aussprungpunkte eingeplant werden müssen. Entsprechend fallen auch der für die Aussprungpunkte erforderliche Speicherplatzbedarf und die erforderliche Rechenzeit der Programmausführung weg. Dennoch ist die Korrektur mehrerer Programmfehler möglich, so daß auch Mikrocontroller, die mit einem fehlerhaften ROM hergestellt worden sind, problemlos verwendet werden können.

Unter dem Begriff "Chipkarte" sollen im vorliegenden Dokument alle Bauformen eines tragbaren, kartenförmigen Datenträgers mit einem Ein-Chip-Mikrocontroller verstanden werden. Neben den üblichen Ausgestaltungen in Scheckkartengröße oder als kleine Kartenmodule, z.B. SIMs - *subscriber identity module* bei Mobiltelefonen, sind dies auch Bauformen z.B. als Schlüsselanhänger oder Ringe.

In bevorzugten Ausgestaltungen der Erfindung ist eine einzige Verteilerroutine mit einer einzigen Startadresse vorgesehen, auf die ein Unterbrechungsvektor des Mikrocontrollers zeigt. Stellt die Vergleichslogik eine Übereinstimmung fest, so löst sie vorzugsweise unabhängig davon, mit welcher Auslöseadresse sich die Übereinstimmung ergeben hat, eine Unterbrechung aus, die einen Aufruf der Verteilerroutine bewirkt.

Zur Wiederaufnahme der Programmausführung nach dem Abarbeiten einer Patchroutine wird vorzugsweise ein im Mikrocontroller vorgesehener Unterbrechungs-Rückkehrmechanismus (*return from interrupt*) benutzt. In diesem Zusammenhang kann vorgesehen sein, daß die Verteilerroutine oder die aufgerufene Patchroutine eine Rückkehradresse in einen Stapelspeicherbereich des Mikrocontrollers schreibt. Die Programmausführung wird dann auf Grundlage dieser Rückkehradresse fortgesetzt.

Die Auswahl der aufzurufenden Patchroutine durch die Verteilerroutine erfolgt in manchen Ausgestaltungen der Erfindung auf Grundlage des Programmzählerinhalts zu dem Zeitpunkt, an dem die Übereinstimmung mit einer der Auslöseadressen festgestellt wurde. Bei Ausführungsformen, bei denen ein Unterbrechungsmechanismus zum Aufruf der Verteilerroutine eingesetzt wird, kann diese Programmzähleradresse insbesondere aus dem Stapelspeicher ausgelesen werden. In anderen Ausgestaltungen ist vorgesehen, daß die Vergleichslogik in einem Ergebnisregister entweder die Auslöseadresse oder einen diese Adresse angebenden Indexwert speichert, und daß die Auswahl der Patchroutine durch die Verteilerroutine auf Grundlage dieser Daten vorgenommen wird.

Zum Schutz der Auslöseadressen und/oder der Patchroutinen und/oder der Verteilerroutine und/oder weiterer Daten gegen Manipulationen ist vorzugsweise eine Möglichkeit vorgesehen, um die für diese Daten und Routinen vorgesehenen Speicherbereiche durch einen Sperreintrag gegen jede nachträgliche Veränderung zu sichern. Alternativ oder zusätzlich kann die Anzahl der zu korrigierenden Programmfehler - und damit die Anzahl der Auslöseadressen und Patchroutinen - in einen dafür vorgesehenen Speicherbereich geschrieben werden. In manchen Ausgestaltungen der Erfindung werden nach jedem Rücksetzen der Chipkartenhardware Auslöseadressen gemäß der angegebenen oder auf sonstige Weise bestimmten Anzahl aus dem Patchspeicher in entsprechende Vergleichsregister des Prozessorkerns übertragen.

Der Patchspeicher ist vorzugsweise ein elektrisch programmierbarer Speicher, z.B. ein PROM (*programmable read only memory*) oder ein EPROM (*erasable programmable read only memory*) oder ein EEPROM (*electrically erasable programmable read only memory*) oder ein FLASH-Speicher. In der Regel ist der Patchspeicher lediglich ein reservierter Bereich innerhalb eines größeren Speicherblocks, der in einer der genannten Technologien im Mikrocontroller vorgesehen ist. Neben den hier beschriebenen, für die Erfindung relevanten Daten kann der Patchspeicher weitere Daten enthalten. Auch die oben genannten Vergleichsregister können als Bereich des Patchspeichers ausgebildet sein.

In bevorzugten Ausgestaltungen weisen die erfindungsgemäße Chipkarte und das erfindungsgemäße Herstellungsverfahren Merkmale auf, die den gerade beschriebenen und/oder den in den abhängigen Verfahrensansprüchen definierten Merkmalen entsprechen.

Weitere Merkmale, Vorteile und Aufgaben der Erfindung gehen aus der folgenden Detailbeschreibung eines Ausführungsbeispiels und mehrerer Ausführungsalternativen hervor. Es wird auf die schematischen Zeichnungen verwiesen, in denen zeigen:
Fig. 1 ein Blockdiagramm mit Funktionsgruppen einer Chipkarte nach einem Ausführungsbeispiel der Erfindung, und
Fig. 2 ein Ablaufdiagramm eines Verfahrensablaufs bei der Programmausführung durch die Chipkarte von Fig. 1.

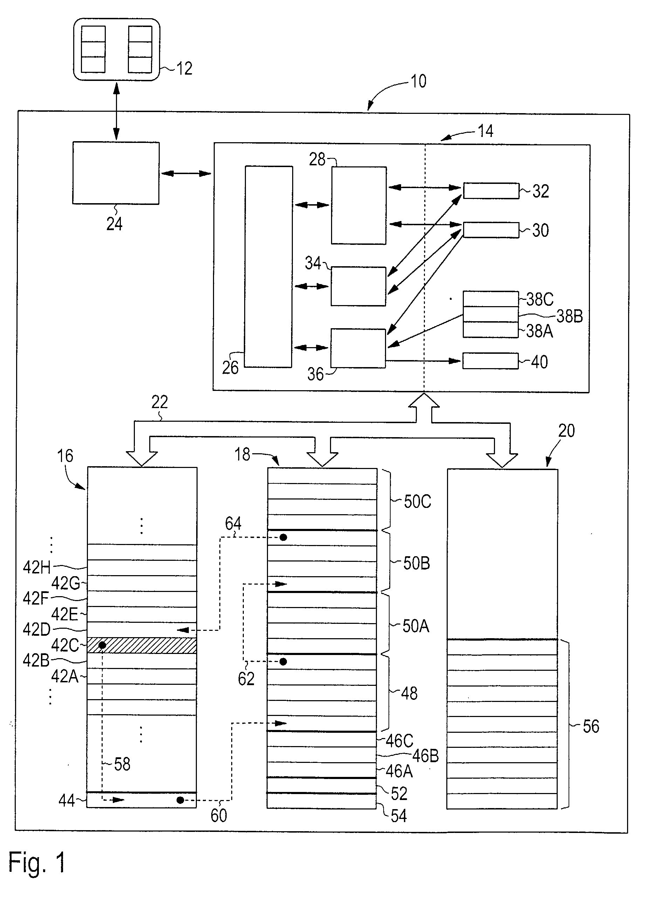

Die in Fig. 1 schematisch gezeigte Chipkarte weist einen Mikrocontroller 10 auf, der mit einer externen Schnittstelle 12 verbunden ist. Der Mikrocontroller 10 ist als Ein-Chip-Mikrocontroller mit einem Prozessorkern 14, einem maskenprogrammierten Programmspeicher 16, einem elektrisch programmierten Patchspeicher 18 und einem Arbeitsspeicher 20 ausgestattet. Ein Bus 22 verbindet den Prozessorkern 14 mit den Speichern 16,18 und 20. Eine Schnittstellentreiber-Schaltung 24 dient zur Übertragung von Ein- und Ausgabesignalen zwischen der Schnittstelle 12 und dem Prozessorkern 14. Die Schnittstelle 12 kann, wie in der Fig. 1 angedeutet, als Kontaktfeld ausgebildet sein; von dieser Ausführung wird im folgenden stets ausgegangen. Alternativ kann die Schnittstelle 22 auch kontaktlos arbeitend, etwa als Antenne ausgeführt sein.

Der Prozessorkern 14 weist eine Vielzahl von funktionalen Einheiten auf, von denen in Fig. 1 aus Gründen der Übersichtlichkeit nur einige im Hinblick auf die Erfindung relevante Elemente gezeigt sind. Die Darstellung des Prozessorkerns 14 in Fig. 1 ist konzeptionell in, im linken Abschnitt des Prozessorkerns 14 gezeigte Logikbaugruppen und, im rechten Abschnitt gezeigte Register untergliedert. Eine Steuerlogik 26 dient zur Koordinierung aller Baugruppen des Prozessorkerns 14. Die Dekodierung und Ausführung von Programmbefehlen wird von einer Befehlsausführungslogik 28 übernommen, die dazu unter anderem auf einen Programmzähler 30, einen Stapelzeiger 32 sowie auf weitere in Fig. 1 nicht gezeigte Register und Baugruppen zugreift. Eine Unterbrechungslogik 34 steuert die Abarbeitung von Unterbrechungsanforderungen und greift dabei ebenfalls auf den Programmzähler 30 und den Stapelzeiger 32 zu.

Für die erfindungsgemäße Funktionalität wesentlich ist eine Vergleichslogik 36, die den Inhalt mehrerer Vergleichsregister 38A, 38B, ..., welche im folgenden gemeinsam mit 38x bezeichnet werden, vor jeder Befehlsausführung mit dem Inhalt des Programmzählers 30 vergleicht. Im vorliegend beschriebenen Ausführungsbeispiel sind drei Vergleichsregister 38x vorgesehen, so daß sich maximal drei voneinander unabhängige Fehler im Programmspeicher 16 korrigieren lassen. In Ausführungsalternativen kann der Prozessorkern 14 mehr oder weniger Vergleichsregister 38x aufweisen. Ein Ergebnisregister 40 ist im Prozessorkern 14 vorgesehen, um bei einer durch die Vergleichslogik 36 festgestellten Übereinstimmung des Inhalts des Programmzählers 30 mit einem der Vergleichsregister 38x einen Indexwert - im vorliegenden Ausführungsbeispiel z.B. einen der Werte 0 bis 2 - desjenigen Vergleichsregisters 38x, mit dem die Übereinstimmung festgestellt wurde, aufzunehmen.

Der Programmspeicher 16 ist als maskenprogrammiertes ROM (*read only memory*) ausgestaltet. Eine Vielzahl von Programmbefehlen 42A, 42B, 42C, ..., die zusammenfassend mit 42x bezeichnet werden, ist durch eine entsprechende Ausgestaltung der bei der Herstellung verwendeten Masken in den Programmspeicher 16 einprogrammiert. Durch die Programmbefehle 42x werden ein oder mehrere von der Chipkarte auszuführende Programme implementiert. Es soll beispielhaft angenommen werden, daß der in Fig. 1 schraffiert gezeigte Programmbefehl 42C wegen eines Programmierfehlers nicht die erwünschte Funktion ausführt. Der Programmspeicher 16 enthält ferner einen Unterbrechungsvektor 44, der die bei der Unterbrechungsbehandlung aufzurufende Adresse enthält. Zusätzlich kann der Programmspeicher 16 weitere Informationen, z.B. Konstanten oder andere Daten, enthalten, die in Fig. 1 nicht gesondert dargestellt sind.

Der Patchspeicher 18 ist als elektrisch programmierbarer Speicher ausgestaltet, nämlich im vorliegenden Ausführungsbeispiel als EEPROM. In dem Patchspeicher 18 sind mehrere, im folgenden zusammenfassend mit 46x bezeichnete, Auslöseadressen 46A, 46B, ..., eine Verteilerroutine 48 und mehrere, zusammenfassend mit 50x bezeichnete, Patchroutinen 50A, 50B, ... enthalten. Ein Anzahleintrag 52 gibt die Anzahl der aktiven Auslöseadressen 46x an. Ein Sperreintrag 54 verhindert eine nachträgliche Veränderung der Auslöseadressen 46x, der Verteilerroutine 48 und der Patchroutinen 50x. Die Anzahl der Auslöseadressen 46x und der Patchroutinen 50x entspricht hier der Anzahl der Vergleichsregister 38x; in Ausführungsalternativen können diese Anzahlen jedoch auch voneinander abweichen.

Neben dem hier beschriebenen Patchspeicher 18 sind im Mikrocontroller 10 weitere elektrisch beschreibbare Speicherbereiche vorgesehen, die z.B. zum nicht-flüchtigen Ablegen von Konfigurations- und Benutzerdaten dienen. Diese weiteren Speicherbereiche sind aus Gründen der Übersichtlichkeit jedoch in Fig. 1 nicht gezeigt.

Der Arbeitsspeicher 20 ist als flüchtiges RAM (*random access memory)* ausgestaltet. Er weist einen Bereich für einen Stapelspeicher 56 auf, dessen aktueller Füllungsstand durch den Stapelzeiger 32 angegeben wird. Weitere Bereiche des Arbeitsspeichers 20 dienen zum Ablegen temporärer Daten während der Programmausführung.

Die Chipkarte einschließlich des maskenprogrammierten Programmspeichers 16 wird auf an sich bekannte Weise hergestellt, indem der Mikrocontroller 10 als Halbleiterchip gefertigt, in einen Kartenkörper eingefügt und mit dem Kontaktfeld 12 verbunden wird. Falls sich herausstellt, daß der maskenprogrammierte Programmspeicher 16 fehlerhafte Abschnitte enthält, hier z.B. den Programmbefehl 42C, so werden bei der folgenden Initialisierung der Chipkarte entsprechende Korrekturinformationen in den Patchspeicher 18 geschrieben. Für jeden zu korrigierenden Abschnitt im Programmspeicher 16 werden eine Auslöseadresse 46x und eine entsprechende Patchroutine 50x in den Patchspeicher 18 eingetragen.

Die Verteilerroutine 48 ist stets dann erforderlich, wenn zu korrigierende Programmfehler vorliegen. Im vorliegenden Ausführungsbeispiel ist die Verteilerroutine 48 im Patchspeicher 18 enthalten und wird demgemäß erst bei der Initialisierung in die Chipkarte geladen. Es sind jedoch auch Ausgestaltungen vorgesehen, bei denen eine generische Verteilerroutine im Programmspeicher 16 enthalten ist. Diese generische Verteilerroutine kann so ausgestaltet sein, daß sie auf in den Patchspeicher 18 einprogrammierte Adreß- und Sprungzieldaten zugreift; es kann jedoch auch vorgesehen sein, daß die generische Verteilerroutine in Abhängigkeit von einer Indexnummer des die Unterbrechung auslösenden Vergleichsregisters 38x Sprünge zu fest vorgegebenen Startadressen der Patchroutinen 50x im Patchspeicher 18 ausführt.

Jede Auslöseadresse 46x gibt den Stand des Programmzählers 30 an, bei dem die Unterbrechung ausgelöst werden soll. Je nach der Ausgestaltung des Prozessorkerns 14 kann die Auslöseadresse 46x identisch mit der Adresse des ersten zu korrigierenden Programmbefehls, hier z.B. der Adresse des Programmbefehls 42C, sein oder von dieser Adresse um einen bestimmten Versatz abweichen; letzteres ist insbesondere bei Prozessorkernen möglich, die in einem fließbandartigen Bearbeitungsverfahren (*pipelining*) stets mehrere Programmbefehle in unterschiedlichen Stufen bearbeiten. Die Patchroutine 50x führt die korrekten Programmfunktionen statt des fehlerhaften Programmabschnitts aus. Sie endet mit einem Rücksprung zu einem Programmbefehl, im vorliegenden Beispiel dem Befehl 42D, der von dem Fehler nicht mehr betroffen ist.

Zum Abschluß der Initialisierung der Chipkarte wird die Anzahl der gültigen Auslöseadressen 46x, entsprechend der Anzahl der aktiven Patchroutinen 50x, als Anzahleintrag 52 in den Patchspeicher 18 geschrieben. Schließlich wird der Sperreintrag 54 gesetzt, um jede weitere Veränderung des Patchspeichers 18 zu unterbinden. Im Zusammenhang mit diesen Schritten wird der Mechanismus zur Unterbrechungsbehandlung in der Chipkarte unwiderruflich aktiviert.

Beim Hochfahren (*power-on-reset*) und nach jedem weiteren Rücksetzen (*reset*) der Chipkarte lädt der Prozessorkern 14 die gültigen Auslöseadressen 46x - deren Anzahl durch den Anzahleintrag 52 angegeben ist oder auf andere Weise bestimmt wird - in die Vergleichsregister 38x. Gegebenenfalls verbleibende Vergleichsregister 38x werden auf einen Wert gesetzt, der bei der Programmausführung nicht auftreten kann. Auf ähnliche Weise können auch ungültige Auslöseadressen 46x im Patchspeicher 18 markiert sein. In Ausführungsalternativen können die Vergleichsregister als elektrisch programmierbare Festwertspeicher, z.B. EEPROM-Zellen, ausgebildet sein, die während der Initialisierung der Chipkarte unmittelbar programmiert werden. Derartige Vergleichsregister können in den Prozessorkern 14 integriert sein oder über den Bus 22 angesprochen werden. In beiden Fällen sind solche Vergleichsregister konzeptuell dem Patchspeicher 18 zuzuordnen.

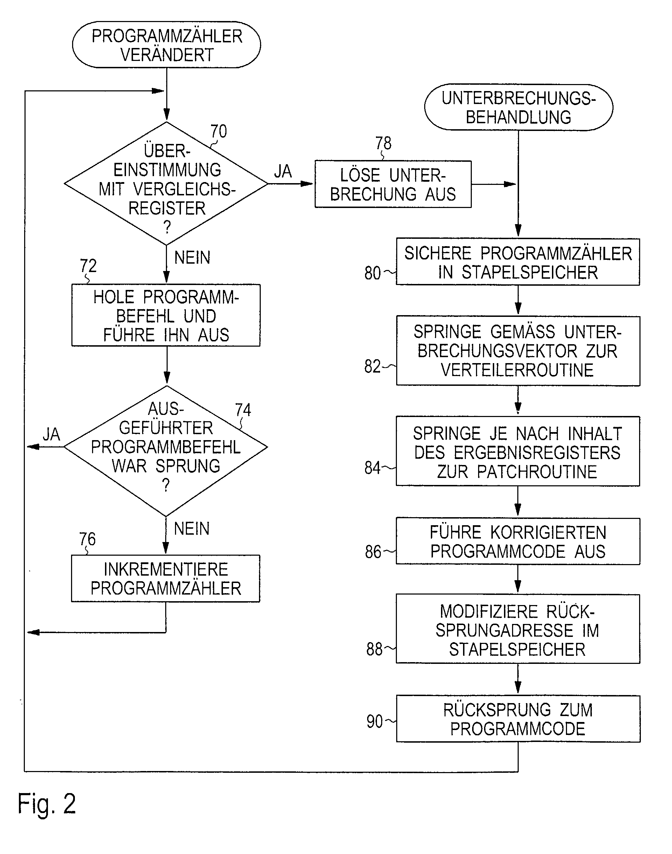

Der laufende Betrieb der Chipkarte bei der Ausführung von Programmbefehlen 42x ist in Fig. 2 gezeigt. Der beispielhafte Ablauf beginnt in einem Zustand, bei dem der Programmzähler 30 gerade verändert worden ist. In Abfrage 70 überprüft die Vergleichslogik 36, ob der neue Inhalt des Programmzählers 30 identisch mit dem Inhalt eines der Vergleichsregister 38x ist. Ist dies nicht der Fall, so wird der durch den neuen Programmzählerstand angegebene Programmbefehl 42x, hier z.B. der Programmbefehl 42B, in Schritt 72 in den Prozessorkern 14 geladen und von der Befehlsausführungslogik 28 auf an sich bekannte Weise ausgeführt.

War der ausgeführte Programmbefehl 42x ein Sprung - "JA"-Zweig von Abfrage 74 -, so ist der Programmzähler 30 bereits durch diesen Befehl neu gesetzt worden, und der Ablauf wird unmittelbar bei Schritt 70 fortgesetzt. Andernfalls .- "NEIN"-Zweig von Abfrage 74 - wird der Programmzähler 30 in Schritt 76 inkrementiert und zeigt nun z.B. auf den zu korrigierenden Programmbefehl 42C. Bei der dann erfolgenden Abfrage 70 stellt die Vergleichslogik 36 daher eine Übereinstimmung des neuen Programmzählerstands mit dem Inhalt eines der Vergleichsregister 38x, hier z.B. dem Vergleichsregister 38B, fest. Die Vergleichslogik 36 löst daraufhin in Schritt 78 eine Unterbrechung (*interrupt*) aus, die von der Unterbrechungslogik 34 bearbeitet wird.

Zur Unterbrechungsbehandlung schreibt die Unterbrechungslogik 34 zunächst den aktuellen Stand des Programmzählers 30 in den Stapelspeicher 56 und verändert den Inhalt des Stapelzeigers 32 entsprechend, Schritt 80. Es erfolgt nun in Schritt 82 ein Sprung zu der durch den Unterbrechungsvektor 44 angegebenen Adresse, nämlich zu der Startadresse der Verteilerroutine 48 (gestrichelte Pfeile 58 und 60 in Fig. 1). Die Verteilerroutine 48 liest das Ergebnisregister 40 aus, in das die Vergleichslogik 36 einen Indexwert desjenigen Vergleichsregisters 38x eingeschrieben hat, mit dessen Inhalt die Übereinstimmung mit dem Inhalt des Programmzählers 30 festgestellt wurde, hier z.B. den Indexwert 1 für das Vergleichsregister 38B. Abhängig von diesem Indexwert verzweigt die Verteilerroutine 48 in Schritt 84 zu der entsprechenden Patchroutine 50x, hier z.B. zur Patchroutine 50B, angedeutet durch den gestrichelten Pfeil 62 in Fig. 1.

Im vorliegenden Ausführungsbeispiel ist vorgesehen, daß jede Patchroutine 50x eine festgelegte Byteanzahl im Patchspeicher 18 einnimmt. In Fig. 1 sind aus Gründen der Übersichtlichkeit nur je 4 Byte gezeigt, es können jedoch auch andere Byteanzahlen vorgesehen sein. Die Verteilerroutine 48 verzweigt dann zu einer Adresse, die der Startadresse der ersten Patchroutine 50A plus dem mit der Byteanzahl multiplizierten Indexwert entspricht. In einer anderen Ausgestaltung kann der Patchspeicher 18 ferner für jeden Indexwert einen Eintrag über die Startadresse der entsprechenden Patchroutine 50x aufweisen. Dieser Eintrag wird dann von der Verteilerroutine 48 ausgewertet. In weiteren Ausführungsalternativen ist im Prozessorkern 14 kein Ergebnisregister 40 vorgesehen. Die Verteilerroutine 48 kann dann den Programmzählerstand, bei dem die Übereinstimmung festgestellt wurde, aus dem Stapelspeicher 56 auslesen und den Indexwert durch einen Vergleich dieses Programmzählerstands mit den Auslöseadressen 46x bestimmen.

Nach dem Sprung zur Startadresse der einschlägigen Patchroutine 50x, hier z.B. Patchroutine 50B, in Schritt 84 werden die in dieser Patchroutine 50x enthaltenen Programmbefehle in Schritt 86 ausgeführt, um die gewünschte Programmfunktion zu erzielen.

Zum Abschluß der Patchroutine 50x wird in Schritt 88 die Adresse des nächsten im Programmspeicher 16 auszuführenden Befehls 42x, hier z.B. die Adresse des Programmbefehls 42D, in den Stapelspeicher 56 geschrieben. Dabei wird ohne Veränderung des Stapelzeigers 32 die bei der Unterbrechungsauslösung in Schritt 80 in den Stapelspeicher 56 geschriebene Rückkehradresse verändert. Die mit dem Setzen der Rücksprungadresse zusammenhängenden Schritte werden in Ausführungsalternativen bereits von der Verteilerroutine 48 durchgeführt. Dazu können im Patchspeicher 18 weitere Einträge vorgesehen sein, die jedem Indexwert des Ergebnisregisters 40 die gewünschte Rücksprungadresse zuordnen. In weiteren Ausführungsalternativen kann vorgesehen sein, daß der Prozessorkern 14 bei der Unterbrechungsauslösung in Schritt 78 weitere Informationen, z.B. den Inhalt eines Statusregisters, im Stapelspeicher 56 ablegt. Auch solche Informationen müssen in Schritt 88 gegebenenfalls korrigiert werden, um den hier beschriebenen Programmkorrekturmechanismus transparent ablaufen zu lassen.

In Schritt 90 endet die Patchroutine 50x mit einem Befehl zur Rückkehr von der Unterbrechungsbearbeitung (*return from interrupt*). Dieser Befehl veranlaßt die Unterbrechungslogik 34, die im Stapelspeicher 56 enthaltene Rückkehradresse in den Programmzähler 30 zu laden und den Stapelzeiger 32 entsprechend zu verändern. Die Programmausführung wird nun bei dem Programmbefehl 42x an der angegebenen Rückkehradresse fortgesetzt, hier z.B. bei Programmbefehl 42D, angedeutet durch den gestrichelten Pfeil 64 in Fig. 1.

Insgesamt wird durch dieses Verfahren der fehlerhafte Abschnitt im Programmspeicher 16 übersprungen und durch die korrigierte Fassung in der entsprechenden Patchroutine 50x ersetzt. Speicherplatz und zusätzliche Programmlaufzeit werden nur benötigt, wenn tatsächlich Fehler im Programmspeicher 16 enthalten sind und korrigiert werden müssen.

## Patentansprüche

1. Verfahren zur Programmausführung durch eine Chipkarte, die einen Mikrocontroller (10) mit zumindest den folgenden, auf einem einzigen Halbleiterchip integrierten Komponenten aufweist:
- einen Prozessorkern (14) mit einer Vergleichslogik (36), die Zugriff auf mehrere Auslöseadressen (46x) hat,
- einen maskenprogrammierten Programmspeicher (16), der mindestens ein auszuführendes Programm mit einer Vielzahl von Programmbefehlen (42x) enthält, und
- einen programmierbaren Patchspeicher (18), der mehrere gegen nachträgliche Veränderung gesicherte Patchroutinen (50x) enthält,
wobei das Verfahren die folgenden wiederholt ausgeführten Schritte aufweist:
- durch die Vergleichslogik (36) ausgeführtes Vergleichen (70) der Adresse eines zur Ausführung vorgesehenen Programmbefehls (42x) mit den mehreren Auslöseadressen (46x),
- falls keine Übereinstimmung festgestellt wird, Ausführen (72, 74, 76) des Programmbefehls (42x),
- falls eine Übereinstimmung mit einer der Auslöseadressen (46x) festgestellt wird, Ausführen der folgenden Schritte:
. Aufrufen (78, 80, 82) einer Verteilerroutine (48), die in Abhängigkeit von der Auslöseadresse (46x), mit der die Übereinstimmung festgestellt wurde, eine der mehreren Patchroutinen (50x) aufruft (84),
. Ausführen (86) der aufgerufenen Patchroutine (50x), und
. Rücksprung (88, 90) zu einem Programmbefehl (42x) des auszuführenden Programms in Abhängigkeit von der aufgerufenen Patchroutine (50x) und/oder der Auslöseadresse (46x), mit der die Übereinstimmung festgestellt wurde.

2. Verfahren nach Anspruch 1, **dadurch gekennzeichnet, daß** die Vergleichslogik (36), wenn sie die Übereinstimmung der Adresse eines zur Ausführung vorgesehenen Programmbefehls (42x) mit einer der Auslöseadressen (46x) feststellt, eine Unterbrechung auslöst (78), die bewirkt, daß die Programmausführung bei einer durch einen Unterbrechungsvektor (44) angegebenen Startadresse der Verteilerroutine (48) fortgesetzt wird.

3. Verfahren nach Anspruch 1 oder Anspruch 2, **dadurch gekennzeichnet, daß** der Mikrocontroller (10) einen Stapelspeicher (56) aufweist, und daß die Verteilerroutine (48) oder die Patchroutine (50x) eine Adresse in den Stapelspeicher (56) einträgt, die als Grundlage für den Rücksprung (90) zum auszuführenden Programm nach dem Ende der Ausführung der Patchroutine (50x) dient.

4. Verfahren nach den Ansprüchen 2 und 3, **dadurch gekennzeichnet, daß** bei der Unterbrechungsauslösung (78) eine vom aktuellen Inhalt eines Programmzählers (30) des Prozessorkerns (14) abhängige Adresse in den Stapelspeicher (56) geschrieben wird (80), und daß diese Adresse von der Verteilerroutine (48) gelesen und ausgewertet wird, um die aufzurufende Patchroutine (50x) zu bestimmen.

5. Verfahren nach einem der Ansprüche 1 bis 4, **dadurch gekennzeichnet, daß** der Prozessorkern (14) ein Ergebnisregister (40) aufweist, in das die Vergleichslogik (36) bei einer festgestellten Übereinstimmung einträgt, für welche der mehreren Auslöseadressen (46x) die Übereinstimmung mit der Adresse des zur Ausführung vorgesehenen Programmbefehls (42x) festgestellt wurde, und daß die Verteilerroutine (48) die auszuführende Patchroutine (50x) in Abhängigkeit von den im Ergebnisregister (40) enthaltenen Informationen bestimmt.

6. Verfahren nach einem der Ansprüche 1 bis 5, **dadurch gekennzeichnet, daß** die Auslöseadressen (46x) und/oder die Verteilerroutine (48) und/oder die Patchroutinen (50x) elektrisch in den Mikrocontroller (10) einprogrammiert und mittels eines Sperreintrags (54) gegen nachträgliche Veränderung geschützt sind.

7. Verfahren nach einem der Ansprüche 1 bis 6, **dadurch gekennzeichnet, daß** der Prozessorkern (14) mehrere Vergleichsregister (38x) aufweist, und daß in einem vorbereitenden Verfahrensschritt die Auslöseadressen (46x) aus dem Patchspeicher (18) in die Vergleichsregister (38x) übertragen werden.

8. Verfahren nach einem der Ansprüche 1 bis 7, **dadurch gekennzeichnet, daß** die Anzahl der aktiven Auslöseadressen (46x) und/oder Patchroutinen (50x) in einem Anzahleintrag (52) im Mikrocontroller (10) gespeichert ist.

9. Verfahren nach einem der Ansprüche 1 bis 8, **dadurch gekennzeichnet, daß** der Patchspeicher (18) ein elektrisch programmierbarer Speicher ist, insbesondere ein PROM oder EPROM oder EEPROM oder FLASH-Speicher.

10. Chipkarte mit einem Mikrocontroller (10) mit zumindest den folgenden, auf einem einzigen Halbleiterchip integrierten Komponenten:
- einem Prozessorkern (14) mit einer Vergleichslogik (36), die Zugriff auf mehrere Vergleichsregister (38x) hat, welche ihrerseits dazu eingerichtet sind, mehrere Auslöseadressen (46x) zu speichern,
- einem maskenprogrammierten Programmspeicher (16), der mindestens ein auszuführendes Programm mit einer Vielzahl von Programmbefehlen (42x) enthält, und
- einem programmierbaren Patchspeicher (18), der dazu eingerichtet ist, die mehreren Auslöseadressen (46x) sowie mehrere Patchroutinen (50x) aufzunehmen und diese gegen nachträgliche Veränderung gesichert zu speichern,
- wobei die Chipkarte dazu eingerichtet ist, nach dem Einprogrammieren der mehreren Auslöseadressen (46x) und mehreren Patchroutinen (50x) das Verfahren nach einem der Ansprüche 1 bis 9 auszuführen.

11. Verfahren zur Herstellung einer Chipkarte, mit den Schritten:
- Bereitstellen eines Mikrocontrollers (10) mit zumindest den folgenden, auf einem einzigen Halbleiterchip integrierten Komponenten:
. einem Prozessorkern (14) mit einer Vergleichslogik (36), die Zugriff auf mehrere Vergleichsregister (38x) hat, welche ihrerseits dazu eingerichtet sind, mehrere Auslöseadressen (46x) zu speichern,
. einem maskenprogrammierten Programmspeicher (16), der mindestens ein auszuführendes Programm mit einer Vielzahl von Programmbefehlen (42x) enthält, und
. einem programmierbaren Patchspeicher (18), der dazu eingerichtet ist, die mehreren Auslöseadressen (46x) sowie mehrere Patchroutinen (50x) aufzunehmen und diese gegen nachträgliche Veränderung gesichert zu speichern,
und
- Initialisieren des Mikrocontrollers (10) derart, daß die mehreren Auslöseadressen (46x) und die mehreren Patchroutinen (50x) in den Mikrocontroller (10) eingeschrieben und gegen nachträgliche Veränderung gesichert werden, um den Mikrocontroller (10) zur Ausführung des Verfahrens nach einem der Ansprüche 1 bis 9 einzurichten.
